# EUROPÄISCHE PATENTSCHRIFT

(11) **EP 0 789 667 B1**
(45) Veröffentlichungstag und Bekanntmachung des Hinweises auf die Patenterteilung: **19.05.1999**
(21) Anmeldenummer: 95937818.3
(22) Anmeldetag: 23.10.1995
(51) Int. Cl.: C01B 33/16, C04B 30/00

(54) **VERFAHREN ZUR HERSTELLUNG VON AEROGELEN**
PROCESS FOR PREPARING AEROGELS
PROCEDE DE PRODUCTION D'AEROGELS

(30) Priorität: 03.11.1994 DE 4439217
(43) Veröffentlichungstag der Anmeldung: 20.08.1997
(73) Patentinhaber: CABOT CORPORATION, Boston, MA 02109 (US)
(72) Erfinder: JANSEN, Rolf-Michael, D-65779 Kelkheim (DE); ZIMMERMANN, Andreas, D-64347 Griesheim (DE)
(74) Vertreter: Luderschmidt, Schüler & Partner GbR
(86) Internationale Anmeldenummer: EP9504141
(87) Internationale Veröffentlichungsnummer: WO9614266

(56) Entgegenhaltungen:
- WO-A-92/20623
- GB-A- 682 574
- US-A- 3 794 713
- CHEMISCHES ZENTRALBLATT, Nr. 20, 1965, Berlin, DE; Zusammenfassung Nr. 2187; * Zusammenfassung * & PRZEMYSL CHEM., Bd. 41, 1962 Seiten 87-90, F. POLAK ET AL.
- CHEMICAL ABSTRACTS, vol. 81, no. 14, 7.Oktober 1974 Columbus, Ohio, US; abstract no. 82740a, Seite 328; & CS,A,152 568 (J. VISKA ET AL.) 15.März 1974

## Beschreibung

Die Erfindung betrifft ein Verfahren zur Herstellung von modifizierten SiO₂-Gelen, im folgenden "Aerogele" genannt.

Aerogele im weiteren Sinn, d.h. im Sinne von "Gel mit Luft als Dispersionsmittel", werden durch Trocknung eines geeigneten Gels hergestellt. Unter den Begriff "Aerogel" in diesem Sinne, fallen Aerogele im engeren Sinne, Xerogele und Kryogele. Dabei wird ein getrocknetes Gel als Aerogel im engeren Sinn bezeichnet, wenn die Flüssigkeit des Gels bei Temperaturen oberhalb der kritischen Temperatur und ausgehend von Drücken oberhalb des kritischen Druckes entfernt wird. Wird die Flüssigkeit des Gels dagegen unterkritisch, beispielsweise unter Bildung einer Flüssig-Dampf-Grenzphase entfernt, dann bezeichnet man das entstandene Gel als Xerogel. Es ist anzumerken, daß es sich bei den erfindungsgemäß hergestellten Gelen um Aerogele, im Sinne von Gel mit Luft als Dispersionsmittel handelt. Da diese Gele durch unterkritische Trocknung hergestellt werden, können sie aber auch als Xerogele bezeichnet werden.

SiO₂-Aerogele sind dafür bekannt, daß sie eine hervorragende Wärmeisolationswirkung aufweisen. Sie können beispielsweise durch saure Hydrolyse von Tetraethylorthosilikat in Ethanol hergestellt werden. Bei der Hydrolyse entsteht ein Gel, dessen Struktur durch die Temperatur, den pH-Wert und die Dauer des Gelierprozesses beeinflußt werden kann. Jedoch kollabiert die Gelstruktur im allgemeinen bei der Trocknung der nassen Gele, da die bei der Trocknung auftretenden Kapillarkräfte extrem groß sind. Der Gelkollaps kann dadurch verhindert werden, daß die Trocknung oberhalb der kritischen Temperatur und des kritischen Druckes des Lösungsmittels durchgeführt wird. Da in diesem Bereich die Phasengrenze flüssig/gasförmig verschwindet, entfallen auch die Kapillarkräfte und das Gel verändert sich während der Trocknung nicht, d.h. es tritt auch kein Schrumpfen des Gels während der Trocknung auf. Auf dieser Trocknungstechnik basierende Herstellungsverfahren sind z.B. aus der EP-B-0 396 076 oder der WO 92/03378 bekannt. Diese Technik erfordert aber, beispielsweise bei der Verwendung von Ethanol, eine Temperatur über 240°C und Drücke bis 40 bar. Der Austausch von Ethanol gegen CO₂ vor der Trocknung erniedrigt zwar die Trocknungstemperatur auf ca. 40°C, der benötigte Druck liegt dann aber bei 80 bar.

In der WO 92/20623 wird ein Verfahren offenbart, bei dem SiO₂-Aerogele durch Hydrolyse und Polykondensation von Tetraalkoxysilanen hergestellt werden, das dadurch gekennzeichnet ist, daß das alkohol-wäßrige Gel in einer Lösung Tetraalkoxysilanen gealtert wurde, um die Gelnetzwerkstärke zu erhöhen. Nachteilig zum Stand der Technik ist jedoch, daß sowohl zur Herstellung der Gele als auch zur Gelalterung äußerst teure Rohmaterialien wie Tetraalkoxysilane eingesetzt werden und daß die erforderlichen Standzeiten zur Gelalterung und Netzwerkverstärkung sehr lang sind.

Aus GB-A-682574 ist es bekannt, ein durch Triakyl-Alkoxy-Silan modifiziertes Kieselsäuregel dadurch herzustellen, daß durch Neutralisation von Wasserglas ein Hydrogel gewonnen und anschließend elektrolytfrei gewaschen wird, das Hydrogel z.B. durch Behandeln mit Aceton und geg. weiterem Lösungsmittelaustausch in ein Organogel übergeführt wird, das Organogel in Gegenwart des Silans gealtert und schließlich getrocknet wird.
Das erhaltene Xerogel wird als Wärmedämmaterial verwendet.

Gemäß WO 92/20623 wird ein durch Hydrolyse eines Kieselsäureesters erhaltenes Alkogel mit zusätzlichem Kieselsäureester behandelt, um das Gelgerüst zu verstärken und so den Schrumpf beim Trocknen des Gels zu verkleinern.

Laut CHEMISCHES ZENTRALBLATT, 20, 1965, Nr. 2187 wird Kieselgel dadurch hergestellt, daß Wasserglas über einen sauren Ionenaustauscher geschickt und das einen pH-Wert von ca. 2 aufweisende Eluat durch Zugabe von Lauge geliert wird.

Es wurde nun gefunden, daß man entionisierte SiO₂-Gele, die aus billigem Wasserglas hergestellt werden, bei unterkritischen Bedingungen trocknen kann, wenn man sie vor der Trocknung in einer wäßrig-organischen Lösung aus Alkyl- und/oder Arylorthosilikat bzw. freier Kieselsäure altern läßt. Die erhaltenen Produkte werden im folgenden als "Aerogele" bezeichnet. Sie weisen eine hervorragende Wärmeisolationswirkung auf.

Gegenstand der Erfindung ist ein Verfahren zur Herstellung von Aerogelen, das dadurch gekennzeichnet ist, daß man
a) eine wäßrige Wasserglaslösung mit Hilfe eines sauren lonentauschers oder einer Mineralsäure auf einen pH-Wert ≤ 3 bringt,
b) die dabei entstandene Kieselsäure durch Zugabe einer Base zu einem SiO₂-Gel polykondensiert und, falls in Schritt a) eine Mineralsäure benutzt wurde, das Gel mit Wasser elektrolytfrei wäscht,
c) gegebenenfalls das in Schritt b) erhaltene Gel mit einem geeigneten Alkohol oder organischen Lösungsmittel solange wäscht, bis der Wassergehalt des Gels < 20 Gew.-% ist,
d) das in Schritt b) oder c) erhaltene Gel zur Netzwerkverstärkung mit einer Lösung eines zur Kondensation befähigten Alkyl- und/oder Arylorthosilikates der Formel R¹₄₋ₙSi(OR²)ₙ, wobei n = 3 oder 4 ist und R¹ und R² unabhängig voneinander C₁-C₆-Alkyl, Cyclohexyl oder Phenyl sind, oder mit einer wäßrigen Kieselsäure-Lösung altern läßt,
e) das ins Schritt d) erhaltene, gealterte Gel unterkritisch trocknet.

In Schritt a) wird vorzugsweise ein saures lonentauscherharz eingesetzt, wobei insbesondere solche geeignet sind, die Sulfonsäuregruppen enthalten. Falls man Mineralsäuren einsetzt, sind vor allem Salzsäure und Schwefelsäure geeignet. Als Wasserglas wird im allgemeinen Natrium- und/oder Kaliumwasserglas verwendet.

In Schritt b) wird als Base vorzugsweise NH₄OH, NaOH, KOH, Al(OH)₃, kolloidale Kieselsäure und/oder Wasserglas eingesetzt. Falls man in Schritt a) eine Mineralsäure verwendet, wird das mit Hilfe der Base erzeugte SiO₂-Gel mit Wasser elektrolytfrei gewaschen; vorzugsweise wird dabei solange gewaschen, bis das ablaufende Waschwasser dieselbe elektrische Leitfähigkeit hat wie entmineralisiertes Wasser.

Vor Schritt c) läßt man das Gel vorzugsweise altern, und zwar im allgemeinen bei einer Temperatur zwischen dem Gefrierpunkt und dem Siedepunkt der Lösung, vorzugsweise bei 0 bis 120°C, besonders bevorzugt bei 60 bis 100°C und einem pH-Wert von 4 bis 11, vorzugsweise 4 bis 9. Die Dauer der Alterung beträgt im allgemeinen bis zu 48 Stunden, vorzugsweise bis 5 Stunden.

Vorzugsweise wäscht man das Gel im Schritt c) mit einem geeigneten Alkohol oder organischen Lösungsmittel solange, bis der Wassergehalt < 10 Gew.-% ist, wenn die Gelverstärkung im Schritt d) mit einer Lösung eines Alkyl- und/oder Arylorthosilikates durchgeführt wird. Als Alkohole werden im allgemeinen lineare oder verzweigte aliphatische Alkohole, vorzugsweise Methanol, Ethanol, Propanol, iso-Propanol, Butanol oder iso-Butanol, verwendet. Es ist auch möglich andere organische Lösungsmittel einzusetzen, die mit Wasser mischbar sind, wie z.B. THF und Aceton, sowie Mischungen aus diesen Lösungsmitteln.

Wird die Gelverstärkung in Schritt d, mit einer anorganischen, nieder molekülaren Kieselsäure durchgeführt, so wird vorzugsweise in einem wäßrigen Medium zur Netzwerkverstärkung gealtert. Dadurch kann Schritt c, entfallen.

Es kann vorteilhaft sein, der wäßrigen Phase im Rahmen eines Lösungsmittel-Tausches organische Beimischungen (Alkohole, Aldehyde und/oder Ketone) zuzusetzen, sowie den pH-Wert zwischen 3 und 11 zu variieren, um die Kondensationsgeschwindigkeit und das Abscheiden des SiO₂ aus der im Schritt d) zugesetzten Kieselsäure zu beeinflussen.

Die in Schritt d) durchgeführte Gelverstärkung erfolgt durch Einbringen (z.B. Diffusion) einer zur Kondensation befähigten SiO₂-Quelle in das Porenvolumen des im Schritt b) hergestellten und gegebenenfalls in Schritt c) vorbereiteten Gels und anschließende Abscheidung der SiO₂-Quelle auf dem bestehenden Gelgerüst durch Kondensationsreaktion.
Als SiO₂-Quelle wird entweder ein Alkyl und/oder Arylorthosilikat der Formel R¹₄₋ₙSi(OR²)ₙ, oder eine verdünnte Lösung einer niedermolekularen Kieselsäure eingesetzt.
Soll die Gelverstärkung durch das o.g. Orthosilikat oder Mischungen unterschiedlicher Orthosilikate der gleichen allgemeinen Formel erfolgen, so wird das in Schritt c) vorbereitete Gel in einer alkoholischen Lösung des Orthosilikates gealtert. Als Orthosilikate werden vorzugsweise Orthosilikate der Formel R¹₄₋ₙSi(OR²)ₙ mit n = 1 bis 4 eingesetzt, wobei R¹ und R² unabhängig voneinander C₁-C₆Alkyl, Cyclohexyl oder Phenyl sind. Besonders bevorzugt verwendet man Tetraethyl- und/oder Tetramethylorthosilikat. Die Konzentration des Orthosilikates in der alkoholischen Lösung beträgt 0,1 bis 30 Vol.-%, vorzugsweise 1 bis 10 Vol.-%. Als Alkohole werden im allgemeinen lineare oder verzweigte aliphatische Alkohole, vorzugsweise Methanol, Ethanol, Propanol, iso-Propanol, Butanol oder iso-Butanol, verwendet. Die Dauer der Alterung beträgt im allgemeinen 10 Minuten bis 48 Stunden, vorzugsweise 10 Minuten bis 24 Stunden.

Alternativ zu der Verwendung von Orthosilikaten zur Gelverstärkung in Schritt d) können auch verdünnte, wäßrige Lösungen von niedermolekularer Kieselsäure und/oder Alkalisilikaten eingesetzt werden. Bei Verwendung der freien Kieselsäure, die z.B. über einen zuvor beschriebenen Ionenaustausccher aus einer wäßrigen Lösung erhalten werden kann, besteht der Vorteil, daß keine Salzionen aus der pH-Wert Änderung und Neutralisation der Wasserglaslösung im Gel zurückbleiben, die sich negativ auf die Trocknung auswirken. Bevorzugt ist eine Kieselsäure-Lösung mit einer Konzentration von 1 bis 10 Gew.-%, besonders bevorzugt 4 bis 7 Gew.-%, die z.B. durch Austausch der Kationen an einem zuvor beschriebenen Ionenaustauscherharz hergestellt wurde. Weiterhin können der Lösung organische Anteile wie z.B. Ketone, Aldehyde sowie verzweigte und unverzweigte Alkohole in geeigneter Konzentration zugesetzt sein, um die Polykondensation der Kieselsäure, das Clusterwachstum der sich bildenden Polykondensate sowie das Abscheiden auf dem in Schritt b) gebildeten und gegebenenfalls im Schnitt c) vorbereiteten Gelgerüsts zu beeinflussen. Die Obergrenze der gesamten organischen Beimischung richtet sich nach dem Ausfällen erster SiO₂-Anteile.

Die Schritte a) bis d) werden vorzugsweise bei einer Temperatur zwischen dem Gefrierpunkt der Lösung und 150°C und einem Druck von 1 bis 10 bar durchgeführt.

In Schritt e) wird das gealterte Gel unterkritisch, vorzugsweise bei Temperaturen von -30 bis 200°C, besonders bevorzugt von 0 bis 150°C getrocknet. Die bei der Trocknung angewandten Drücke liegen vorzugsweise bei 0,001 bis 20 bar, besonders bevorzugt bei 0,01 bis 5 bar. Die Trocknung wird im allgemeinen solange fortgeführt, bis das Gel einen Lösungsmittel-Restgehalt von weniger als 0,1 Gew.-% aufweist.

Das erfindungsgemäße Verfahren wird im folgenden an einem Ausführungsbeispiel näher beschrieben.

### Beispiel

1 l einer Natriumwasserglaslösung (mit einem Gehalt von 8 Gew.-% SiO₂ und einem Na₂O:SiO₂ Verhältnis von 1:3,3) wird über eine Kolonne (Durchmesser: 50 mm, Länge: 300 mm) geleitet (20 ml/min), die mit 0,5 l eines sauren lonentauscherharzes (Styroldivinylbenzolcopolymer mit Sulfonsäuregruppen, handelsüblich unter dem Namen Duolite® C20) gefüllt ist. Der pH-Wert der abfließenden Lösung beträgt 2,3. Anschließend wird die Lösung mit 1 molarer NaOH-Lösung auf einen pH von 5,6 eingestellt. Danach wird das entstandene Gel mechanisch mit einem Rührwerk zerkleinert (mittlere Korngröße < 0,5 mm) und anschließend das Wasser aus dem Gel mit Ethanol bei 50°C in einem kontinuierlich arbeitenden Extraktionsgefäß entfernt, bis der Restwassergehalt im Gel < 10 Gew.-% ist. Danach wird das Gel bei 60°C für 24 Stunden in einer ethanolischen Tetraethylorthosilikat-Lösung (Konzentration 10 Vol.-%) gealtert. Die Trocknung des Gels erfolgt in einem stickstoffgespülten Trockner (6 Stunden bei 60°C und 12 Stunden bei 150°C).

Das so erhaltene, transparente Aerogel weist eine Dichte von 0,25 g/cm³ auf. Die spezifische Oberfläche nach BET beträgt etwa 820 m²/g. Der λ-Wert liegt bei 0,027 W/mK.

Die Wärmeleitfähigkeit wurde mit einer Heizdrahtmethode (s. z.B. O. Nielsson, G. Rüschenpöhler, J. Groß, J. Fricke, High Temperatures-High Pressures, Vol. 21, 267-274 (1989)) gemessen.

## Patentansprüche

1. Verfahren zur Herstellung von Aerogelen, dadurch gekennzeichnet, daß man
a) eine wäßrige Wasserglaslösung mit Hilfe eines sauren Ionentauschers oder einer Mineralsäure auf einen pH-Wert ≤ 3 bringt,
b) die dabei entstandene Kieselsäure durch Zugabe einer Base zu einem SiO₂-Gel polykondensiert und, falls in Schritt a) eine Mineralsäure benutzt wurde, das Gel mit Wasser elektrolytfrei wäscht,
c) gegebenenfalls das in Schritt b) erhaltene Gel mit einem geeigneten Alkohol oder organischen Lösungsmittel solange wäscht, bis der Wassergehalt des Gels < 20 Gew.-% ist,
d) das in Schritt b) oder c) erhaltene Gel zur Netzwerkverstärkung mit einer Lösung eines zur Kondensation befähigten Alkyl- und /oder Arylorthosilikates der Formel R¹₄₋ₙSi(OR²)ₙ, wobei n = 3 oder 4 ist und R¹ und R² unabhängig voneinander C₁-C₆-Alkyl, Cyclohexyl oder Phenyl sind, oder mit einer wäßrigen Kieselsäure-Lösung altern läßt,
e) das in Schritt d) erhaltene, gealterte Gel unterkritisch trocknet.

2. Verfahren gemäß Anspruch 1, dadurch gekennzeichnet, daß man in Schritt b) als Base NH₄OH, NaOH, KOH, Al(OH)₃, kolloidale Kieselsäure und/oder Wasserglas einsetzt.

3. Verfahren gemäß Anspruch 1 oder 2, dadurch gekennzeichnet, daß man das in Schritt b) erhaltenen SiO₂-Gel bei einer Temperatur zwischen dem Gefrierpunkt und dem Sledepunkt der Lösung und einem pH-Wert von 4 bis 11 für eine Dauer von bis zu 48 Stunden altern läßt, bevor man in Schritt c) das Wasser entfernt.

4. Verfahren gemäß mindestens einem der Ansprüche 1 bis 3, dadurch gekennzeichnet, daß man in Schritt c) lineare oder verzweigte aliphatische Alkohole verwendet.

5. Verfahren gemäß mindestens einem der Ansprüche 1 bis 4, dadurch gekennzeichnet, daß man als Alkohol in den Schritten c) und/oder d) unabhängig voneinander Methanol, Ethanol, Propanol, iso-Propanol, Butanol oder iso-Butanol verwendet.

6. Verfahren gemäß mindestens einem der Ansprüche 1 bis 5, dadurch gekennzeichnet, daß man in Schritt d) Tetramethylorthosilikat und/oder Tetraethylorthosilikat verwendet.

7. Verfahren gemäß mindestens einem der Ansprüche 1 bis 6, dadurch gekennzeichnet, daß in Schritt d) die Konzentration des Orthosilikats in der alkoholischen Lösung 0,1 bis 30 Vol.-% beträgt.

8. Verfahren gemäß mindestens einem der Ansprüche 1 bis 7, dadurch gekennzeichnete daß man in Schritt d) das Gel 10 Minuten bis 48 Stunden altern läßt.

9. Verfahren gemäß mindestens einem der Ansprüche 1 bis 8, dadurch gekennzeichnet, daß man die Schritte a) bis d) bei einer Temperatur zwischen dem Gefrierpunkt der Lösung und 150°C und einem Druck von 1 bis 10 bar durchführt.

10. Verfahren gemäß mindestens einem der Ansprüche 1 bis 9, dadurch gekennzeichnet, daß man in Schritt e) das gealterte Gel bei -30 bis 200°C und 0,001 bis 20 bar trocknet.

## Claims

1. A method of producing aerogels, characterised in that
a) an aqueous water glass solution is brought to a pH value of ≤3 by means of an acid ion exchanger or a mineral acid,
b) the silicic acid which arises thereby is polycondensed by the addition of a base to produce an SiO₂ gel and, if a mineral acid was used in step a), the gel is washed with water in an electrolyte-free manner,
c) possibly, the gel obtained in step b) is washed with a suitable alcohol or organic solvent until such time as the water content of the gel is less than 20% by weight,
d) the gel obtained in step b) or c) is, for network enhancement, caused to age with a solution of an alkyl and/or aryl orthosilicate to the formulae R¹₄₋ₙSi(OR²)ₙ, which is capable of condensation and in which n = 3 or 4 and R¹ and R² are, independently of one another, C₁-C₆-alkyl, cyclohexyl or phenyl or with an aqueous silicic acid solution,
e) the aged gel obtained in step d) is subcritically dried.

2. A method according to claim 1, characterised in that in step b) the base used is NH₄OH, NaOH, KOH, Al(OH)₃, colloidal silicic acid and/or water glass.

3. A method according to claim 1 or 2, characterised in that the SiO₂ gel obtained in step b) is aged at a temperature between the freezing point and the boiling point ofthe solution and a pH value of 4 to 11 for a period of 1 to 48 hours before the water is eliminated in step c).

4. A method according to at least one of claims 1 to 3, characterised in that linear or branched aliphatic alcohols are used in step c).

5. A method according to at least one of claims 1 to 4, characterised in that the alcohol used in steps c) and/or d) are, independently of one another, methanol, ethanol, propanol, isopropanol, butanol or isobutanol.

6. A method according to at least one of claims 1 to 5, characterised in that tetramethyl orthosilicate and/or tetra-ethyl orthosilicate is used in step d).

7. A method according to at least one of claims 1 to 6, characterised in that, in step d), the concentration of orthosilicate in the alcoholic solution is 0.1 to 30% by volume.

8. A method according to at least one of claims 1 to 7, characterised in that, in step d), the gel is allowed to age for 10 minutes to 48 hours.

9. A method according to at least one of claims 1 to 8, characterised in that steps a) to d) are carried out at a temperature between the freezing point of the solution and 150°C and at a pressure of 1 to 10 bars.

10. A method according to at least one of claims 1 to 9, characterised in that, in step e), the aged gel is dried at -30 to 200°C and 0.001 to 20 bars.

## Revendications

1. Procédé de production d'aérogels, caractérisé en ce que :
a) on porte une solution aqueuse de verre soluble à un pH ≤ 3 au moyen d'un échangeur d'ions acide ou d'un acide minéral ;
b) par addition d'une base, on polycondense l'acide silicique ainsi obtenu en un gel de SiO₂ et, lorsqu'on a utilisé un acide minéral à l'étape a), on lave le gel avec de l'eau pour le débarrasser des électrolytes ;
c) le cas échéant, on lave le gel obtenu à l'étape b) avec un alcool ou un -solvant organique approprié jusqu'à ce que la teneur en eau du gel soit inférieure à 20 % en poids ;
d) afin de renforcer la structure réticulée, on laisse vieillir le gel obtenu à l'étape b) ou c) en présence d'une solution d'un orthosilicate d'alkyle et/ou d'aryle apte à la condensation de formule R¹₄₋ₙSi(OR²)ₙ, dans laquelle n vaut 3 ou 4 et R¹ et R² sont indépendamment l'un de l'autre un alkyle en C₁ à C₆, un cyclohexyle ou un phényle, ou bien en présence d'une solution aqueuse d'acide silicique ; et
e) on sèche le gel vieilli obtenu à l'étape d) en conditions sous-critiques.

2. Procédé selon la revendication 1, caractérisé en ce que, à l'étape b), la base utilisée est NH₄OH, NaOH, KOH, Al(OH)₃, de l'acide silicique colloïdal et/ou du verre soluble.

3. Procédé selon la revendication 1 ou 2, caractérisé en ce qu'on laisse le gel de SiO₂ obtenu à l'étape b) vieillir à une température comprise entre le point de congélation et le point d'ébullition de la solution et à un pH de 4 à 11 pendant une durée allant jusqu'à 48 heures, avant d'éliminer l'eau à l'étape c).

4. Procédé selon l'une au moins des revendications 1 à 3, caractérisé en ce que, à l'étape c), on utilise des alcools aliphatiques à chaîne droite ou ramifiée.

5. Procédé selon l'une au moins des revendications 1 à 4, caractérisé en ce que, aux étapes c) et/ou d), l'alcool utilisé est indépendamment le méthanol, l'éthanol, le propanol, l'isopropanol, le butanol ou l'isobutanol.

6. Procédé selon l'une au moins des revendications 1 à 5, caractérisé en ce que, à l'étape c), on utilise de l'orthosilicate de tétraméthyle et/ou de l'orthosilicate de tétraéthyle.

7. Procédé selon l'une au moins des revendications 1 à 6, caractérisé en ce que, à l'étape d), la concentration de l'orthosilicate dans la solution alcoolique est de 0,1 à 30 % en volume.

8. Procédé selon l'une au moins des revendications 1 à 7, caractérisé en ce que, à l'étape d), on laisse vieillir le gel pendant 10 minutes à 48 heures.

9. Procédé selon l'une au moins des revendications 1 à 8, caractérisé en ce que les étapes a) à d) s'effectuent à une température comprise entre le point de congélation de la solution et 150°C et sous une pression de 1 à 10 bars.

10. Procédé selon l'une au moins des revendications 1 à 9, caractérisé en ce que, à l'étape e), on sèche le gel vieilli à une température de -30 à 200°C et sous une pression de 0,001 à 20 bars.
